# EUROPEAN PATENT SPECIFICATION

(11) **EP 1 444 465 B1**
(45) Date of publication and mention of the grant of the patent: **13.06.2012**
(21) Application number: 02788540.9
(22) Date of filing: 29.10.2002
(51) Int. Cl.: F24D 3/16

(54) **MODULAR RADIANT PARTITION**
MODULARE STRAHLUNGSTRENNWAND
CLOISON RAYONNANTE MODULAIRE

(30) Priority: 06.11.2001 IT RM20010658
(43) Date of publication of application: 11.08.2004
(73) Proprietor: Fosam S.P.A., 33080 Fiume Veneto (IT)
(72) Inventor: MUCIGNAT, Carlo, I-33082 Cordenons (IT)
(74) Representative: Jorio, Paolo
(86) International application number: PCT/IT2002/000685
(87) International publication number: WO 2003/040627

(56) References cited:
- EP-A- 0 955 504
- EP-A- 1 001 234
- DE-A- 19 909 391
- DE-U- 29 824 598
- FR-A- 2 430 569
- GB-A- 888 341
- US-A- 5 740 858
- GROOT DE F ET AL: "FLEXIBELE AFMETINGEN EN EENVOUDIG TE INSTALLEREN" BOUWWERELD, MISSET. DOETINCHEM, NL, no. 18, 27 September 1996 (1996-09-27), pages 52-53, XP000641875 ISSN: 0026-5942

## Description

The present invention refers to a partition wall composed of modular radiant members, having heating and/or cooling capabilities.

Radiant panels adopted in building to heat rooms are known. These panels are usually inserted into walls, false ceilings or even floors, and generally contain a piping system in which water at a desired temperature flows, thereby radiatively heating the room.

However, this kind of heating system entails limits and disadvantages, mostly due to the fact that these panels, requiring specific masonry and/or supporting structures, are not always employable.

Moreover, suchlike systems are not especially flexible and modular, in the sense that, e.g., differentiated heating and/or cooling conditions are unattainable in contiguous rooms or even in different areas of the same room.

In particular, there is widely felt the problem of conditioning rooms having prefab walls, typically offices or other workplaces.

In these cases, walls made of prefab modules are used as partitions, mounted on metal structures so as to attain the desired shapes and subdivisions.

Oft-times, above all in workplaces, persons having different individual needs share the same room.

In these cases, in order to meet said individual needs, there is a pressing demand for heating or cooling different areas of the same room in an independent and customized manner.

DE-29824598 discloses a modular element in which the outer shell is formed as a heat absorber penetrated by cooling tubes of a coolant circuit. The inner shell is formed as a surface heating body penetrated by heating tubes of a heating medium circuit. The coolant and heat medium circuits are heat-coupled to each other by a heat pump. The outer shell on its weather side is provided with a layer which absorbs sunlight.

The main object of the present invention is that of solving this specific problem of the known art, providing a modular member for partitions or the like, comprising a supporting structure, means for reciprocally connecting two or more modular members, whereby it comprises one or more thermal conditioning members apt to be contained inside said modular member.

The present invention further provides a radiant partition which comprises one or more of said modular members.

The main advantage of the modular member according to the present invention lies in that it allows to make partitions comprising radiant members connected thereamong so as to be manageable, individually or groupwise, in order to attain precisely the desired temperature conditions.

Further advantages, features and the modes of employ of the present invention will be made apparent in the following detailed description of a preferred embodiment thereof, given by way of example with reference to the figures of the attached drawings, wherein:

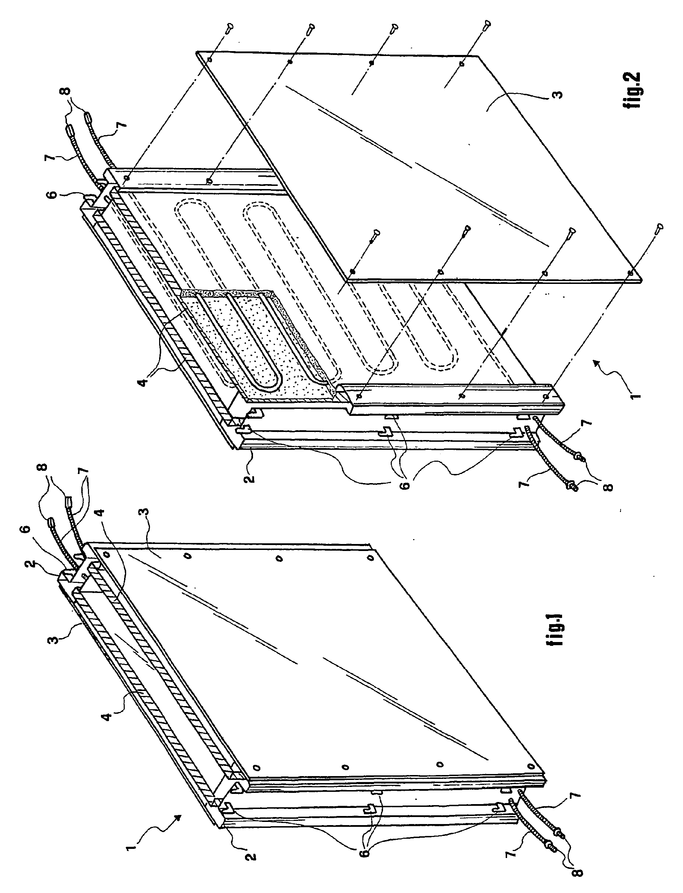

figure 1 is a perspective view of a modular member according to the present invention;
figure 2 is a partially exploded perspective view of the modular member of figure 1;

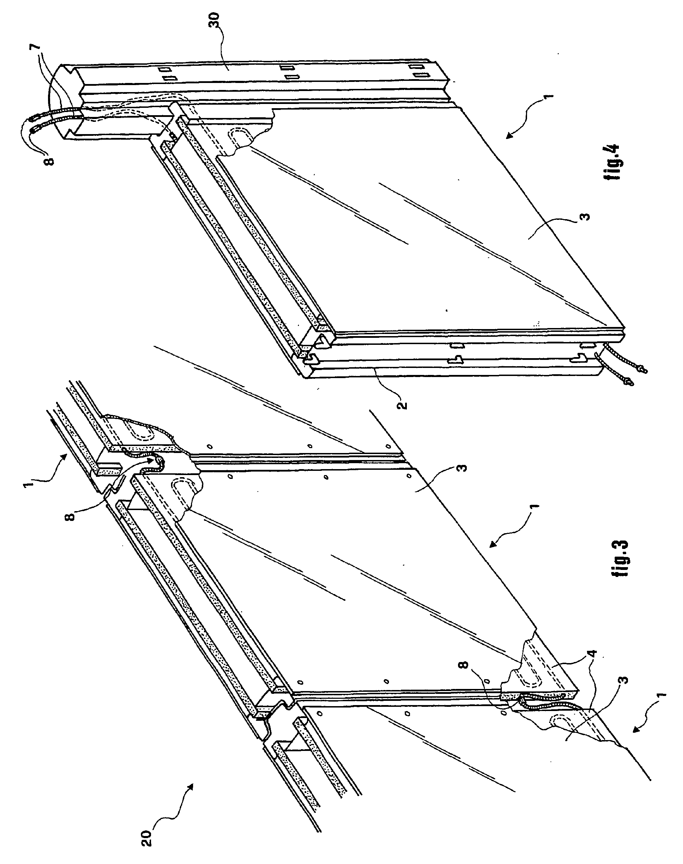

figure 3 is a partially exploded perspective view, showing plural modular members connected thereamong;
figure 4 is a partially exploded perspective view, showing a modular partition member connected to an end member; and

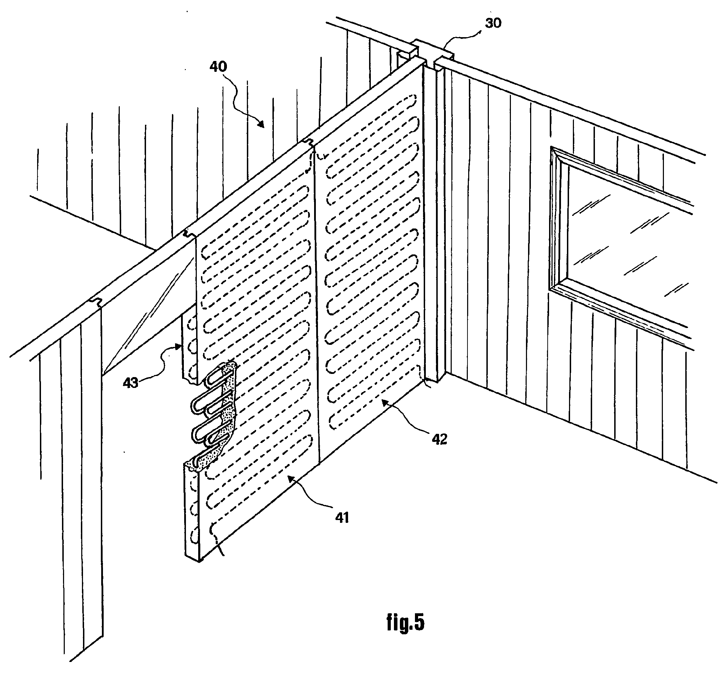

figure 5 is an exemplary view of an application of the present invention.

Hereinafter, reference will be made to the above-listen figures.

A modular member 1 according to the present invention is made of a supporting structure 2, comprising connecting means 6 for the fastening of the modular member 1 to other modular members or to end members, as it will be detailed hereinafter.

The member 1 further comprises two or more cover members 3, apt to cover the two sidewalls thereof. Preferably, such cover panels 3 are metallic, thereby being excellent thermal conductors.

Advantageously, these cover panels could also be drilled, so as to foster ventilation of the same members, e.g. in order to prevent condensation effects especially in case of cooling.

Of course, the external finish, as well as the color of the cover panels 3 could be provided so as to match the surrounding environment.

Inside the modular member 1 one or more thermal conditioning members 4 are provided.

Said thermal conditioning members 4 are selected among known marketed ones, hence will not be detailed hereinafter. An exemplary description thereof will be given, aimed at highlighting the features required therefrom to be useful in the present invention.

In particular, each thermal conditioning member can advantageously be made as a plate 4 comprising a coil-shaped tubular member 7 apt to the transit of fluids, e.g. of water at a predetermined temperature.

Preferably, each modular member 1 comprises two thermal conditioning members 4, one for each side face thereof and directly contacting a corresponding cover panel 3.

Thus, the panels 3 being preferably made of metal, there can be provided a high thermal radiancy in the surrounding environment.

Advantageously, each coil 7 is located so as to have a first end at a corner of the member 1, and the opposite end at the opposite corner thereof. This allows to easily carry out the reciprocal connecting of plural coils thereamong when plural modular members 1 are connected, e.g. to make a partition.

Moreover, the connecting of the coils the one to the other is made easier by the presence of connecting means 8 of said thermal conditioning members 4.

E.g., advantageously such connecting means can comprise a pair of quick-coupling type connectors.

Hence, the use of modular members 1, of end members 30, and optionally of other potentially useful connecting members, allows the connecting of thermal conditioning members so as to define regions 41, 42, 43 of a partition 40.

Each such region implements a hydraulic circuit that is independent from the other ones. Hence, the temperature of the fluid flowing therein, and therefore the temperature of the environment contacting each region is independently controllable.

In particular, it will be possible to independently regulate the temperature of the two faces of a same wall.

The present invention further provides control devices for said temperature, e.g. valves, etc. to be located at predetermined wall sites.

Hereto, the present invention has been described according to a preferred embodiment thereof, given by way of example.

It is understood that other embodiments may be provided, all to be construed as falling within the protective scope thereof, as defined by the appended claims.

## Claims

1. A partition wall (40) composed of modular members (1), each modular member (1) having heating or cooling capabilities and comprising a supporting structure (2) and means (6) for reciprocally connecting said modular members (1), said modular members (1) presenting a first and second side face and having a first and second thermal conditioning member (4) for said first and second side faces respectively, said thermal conditioning members (4) being contained inside said modular members (1), wherein each of said first and second thermal conditioning members (4) comprises a coil-shaped tubular member (7) for the transit of a fluid; each modular member (1) further comprising first and second connecting means (8) for connecting said coils with coils of neighbouring modular members (1); the modular members (1) cooperating with control devices for independently regulating the temperature of the fluid flowing in the coil-shaped tubular members to independently regulate the temperature of the two faces of the partition wall (40).

2. A partition wall according to claim 1, wherein each modular member (1) further comprises two or more cover members (3).

3. A partition wall according to claim 2, wherein each member of said two or more cover members (3) is a panel made of a metallic material.

4. A partition wall according to claim 2 or 3, wherein each member of said two or more cover members (3) is a drilled panel.

5. A partition wall according to any one of the claims 2 to 4, wherein each of said thermal conditioning members (4) directly contacts a corresponding cover member (3).

6. A partition wall according to any one of the preceding claims, wherein plural thermal conditioning members (4) are connected in circuit so as to form partition regions (41,42,43), allowing independent control of the temperature of each such region (41, 42, 43).

7. A partition wall according to claim 6, wherein said connecting means comprises a pair of quick-coupling type connectors (8).

8. A partition wall according to claim 1, wherein each of said control devices is a valve.

## Patentansprüche

1. Trennwand (40), die aus modularen Elementen (1) zusammengesetzt ist, wobei jedes modulare Element (1) Heiz- oder Kühlfähigkeiten aufweist und eine Stützkonstruktion (2) und Mittel (6) zum wechselseitigen Verbinden der modularen Elemente (1) umfasst, wobei die modularen Elemente (1) eine erste und eine zweite Seitenfläche darbieten und ein erstes und ein zweites thermisches Konditionierungselement (4) für die erste bzw. die zweite Seitenfläche aufweisen, wobei die thermischen Konditionierungselemente (4) im Inneren der modularen Elemente (1) untergebracht sind, wobei jedes der ersten und zweiten thermischen Konditionierungselemente (4) ein spulenförmiges Röhrenelement (7) für den Durchgang eines Fluids umfasst; wobei jedes modulare Element (1) des Weiteren ein erstes und ein zweites Verbindungsmittel (8) zum Verbinden der Spulen mit Spulen benachbarter modularer Elemente (1) umfasst; wobei die modularen Elemente (1) mit Steuergeräten zusammenwirken, um die Temperatur des in den spulenförmigen Röhrenelementen fließenden Fluids unabhängig zu regeln und so die Temperatur der beiden Flächen der Trennwand (40) unabhängig zu regeln.

2. Trennwand nach Anspruch 1, wobei jedes modulare Element (1) des Weiteren zwei oder mehr Abdeckelemente (3) umfasst.

3. Trennwand nach Anspruch 2, wobei jedes Element der zwei oder mehr Abdeckelemente (3) ein aus einem metallischen Material hergestelltes Paneel ist.

4. Trennwand nach Anspruch 2 oder 3, wobei jedes Element der zwei oder mehr Abdeckelemente (3) ein gebohrtes Paneel ist.

5. Trennwand nach einem der Ansprüche 2 bis 4, wobei jedes der thermischen Konditionierungselemente (4) direkt ein entsprechendes Abdeckelement (3) berührt.

6. Trennwand nach einem der vorhergehenden Ansprüche, wobei mehrere thermische Konditionierungselemente (4) dergestalt in einem Kreis verbunden sind, dass Trennungsbereiche (41, 42, 43) gebildet werden, wodurch eine unabhängige Steuerung der Temperatur eines jeden solchen Bereichs (41, 42, 43) ermöglicht wird.

7. Trennwand nach Anspruch 6, wobei das Verbindungsmittel ein Paar Schnellkupplungen (8) umfasst.

8. Trennwand nach Anspruch 1, wobei jedes der Steuergeräte ein Ventil ist.

## Revendications

1. Paroi de cloisonnement (40) composée d'éléments modulaires (1), chaque élément modulaire (1) présentant des capacités de chauffage ou de refroidissement et comprenant une structure support (2) et des moyens (6) pour connecter mutuellement lesdits éléments modulaires (1), lesdits éléments modulaires (1) présentant une première et une deuxième face latérale et ayant un premier et un deuxième organe de conditionnement thermique (4) pour lesdites première et deuxième faces latérales, respectivement, lesdits organes de conditionnement thermique (4) étant contenus à l'intérieur desdits éléments modulaires (1), dans laquelle chacun desdits premier et deuxième organes de conditionnement thermique (4) comprend un organe tubulaire (7) en forme de serpentin, pour le transfert d'un fluide ; chaque élément modulaire (1) comprenant en outre des premiers et deuxièmes moyens de connexion (8) pour connecter lesdits serpentins à des serpentins d'éléments modulaires (1) voisins ; les éléments modulaires (1) coopérant avec des dispositifs de commande pour réguler indépendamment la température du fluide s'écoulant dans les organes tubulaires en forme de serpentin, de manière à réguler indépendamment la température des deux faces de la paroi de cloisonnement (40).

2. Paroi de cloisonnement selon la revendication 1, dans laquelle chaque élément modulaire (1) comprend en outre deux, ou plus, organes formant couvercle (3).

3. Paroi de cloisonnement selon la revendication 2, dans laquelle chaque organe desdits deux, ou plus, organes formant couvercle (3) est un panneau formé d'un matériau métallique.

4. Paroi de cloisonnement selon la revendication 2 ou 3, dans laquelle chaque organe desdits deux, ou plus, organes formant couvercle (3) est un panneau perforé.

5. Paroi de cloisonnement selon l'une quelconque des revendications 2 à 4, dans laquelle chacun desdits organes de conditionnement thermique (4) est en contact direct avec un organe formant couvercle (3) correspondant.

6. Paroi de cloisonnement selon l'une quelconque des revendications précédentes, dans laquelle une pluralité d'organes de conditionnement thermique (4) sont branchés en circuit de manière à forer des régions de cloisonnement (41, 42, 43), permettant une commande indépendante de la température de chaque telle région (41, 42, 43).

7. Paroi de cloisonnement selon la revendication 6, dans laquelle lesdits moyens de connexion comprennent une paire de connecteurs (8) de type à couplage rapide.

8. Paroi de cloisonnement selon la revendication 1, dans laquelle chacun desdits dispositifs de commande est une valve.
